# EUROPEAN PATENT APPLICATION

(11) **EP 1 260 134 A2**
(43) Date of publication of application: **27.11.2002**
(21) Application number: 01130043.1
(22) Date of filing: 18.12.2001
(51) Int. Cl.: A01G 3/08

(54) **Electric branch cutter**

(30) Priority: 18.12.2000 IT RN000049; 05.01.2001 IT RN010001 U
(71) Applicant: Zaghini, Corrado, 47030 San Mauro Pascoli (FC) (IT)
(72) Inventor: Zaghini, Corrado, 47030 San Mauro Pascoli (FC) (IT)
(74) Representative: Provvisionato, Paolo

(57) **Abstract**

An electric branch cutter for trees with a tall trunk comprises a frame (1), an electric motor (2) housed in a special seat (1a) of the frame (1), means (3) for cutting the branches, and an extension (4) which can be associated with the frame (1) and which comprises add-on elements (4a) able to modify the length thereof, as required, also during use of the branch cutter (10). A safety device (5) allows start-up of the motor (2) only when the cutting means (3) are in contact with the branch to be cut.

## Description

Numerous mechanical devices intended for plant and tree maintenance exist on the market. It is obvious, however, that it is much more difficult to maintain trees which have a tall trunk than bushes and plants of fairly limited height.

Thus, since heavy and unwieldy bush-cutting devices operating with a combustion engine are used for the latter, it can be understood that these devices can be used at greater heights only if the operator is raised upwards by means of ladders, cranes or mechanical arms with a transportation cage, or scaffolding.

In fact, the branch cutters with a combustion engine which an operator may use while remaining on the ground have a straight telescopic extension which makes the weight to be supported fairly burdensome and have a power transmission system which is fairly complicated. Since, for reasons of weight, the motor must be arranged close to the operator, a transmission shaft, extending along the whole length of the telescopic extension, is required to transfer the driving power to the cutting element located at the other end. Finally, these devices are very noisy and are able to achieve only relatively small heights.

Branch cutters operating with an electric motor and pneumatic compressed-air pruning devices must also be mentioned: in the first case, in order to achieve heights of up to about three and a half metres, telescopic extensions are used, but the blade which has limited dimensions allows the cutting only of small-size branches: in the second case, both the limited power and the need for a compressor constitute the main drawbacks associated with the use of these devices.

Also with regard to safety, the devices used have certain drawbacks: firstly, the operator must always be very careful not to stand in the falling line of the cut branches, since the extension and cutting device have axes which are substantially aligned; moreover, the dangerous nature of the cutting instruments used requires a greater level of safety for those situations where the machine could be accidentally started.

The object of the present invention is therefore that of eliminating the abovementioned drawbacks. The invention, as characterized by the claims, achieves the object by means of an extension comprising add-on elements and a safety device which activates the motor only if the cutting devices are in contact with the branch to be cut.

The main advantage obtained by means of the present invention consists essentially in the fact that the tops of trees situated at up to about 10 metres height may be reached while remaining on the ground in an absolutely safe position.

Moreover, the elements of the extensions may be added or removed also during use of the invention, suspending only momentarily operation thereof.

Further advantages and characteristic features of the invention will emerge more clearly from the detailed following description, provided with reference to the accompanying drawings which show a non-limiting example of embodiment thereof and in which:
- Figure 1 shows a side view of the invention;
- Figure 2 shows an exploded view of the invention, with some parts removed so that others may be seen more clearly;
- Figure 3 shows an overall view of a detail of the invention and a view of the main parts thereof;
- Figure 4 shows the invention along the cross-sections IVa-IVa and IVb-IVb according to Figure 3;

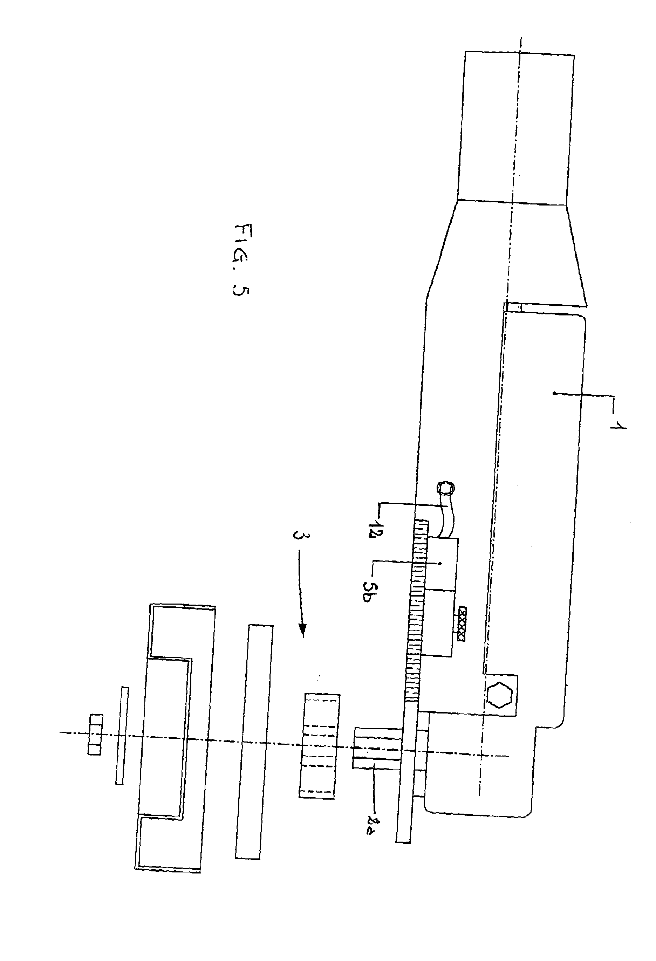

- Figure 5 shows a top plan view of a detail of the invention.

As can be seen from the figures, the invention relates to an electric branch cutter for trees with a tall trunk, comprising a frame (1), an electric motor (2) housed in a special seat (1a) of the frame (1), means (3) for cutting the branches, an extension (4) which can be associated with the frame (1) and a safety device (5) able to allow start-up of the motor (2) only when the cutting means (3) are in contact with the branch to be cut.

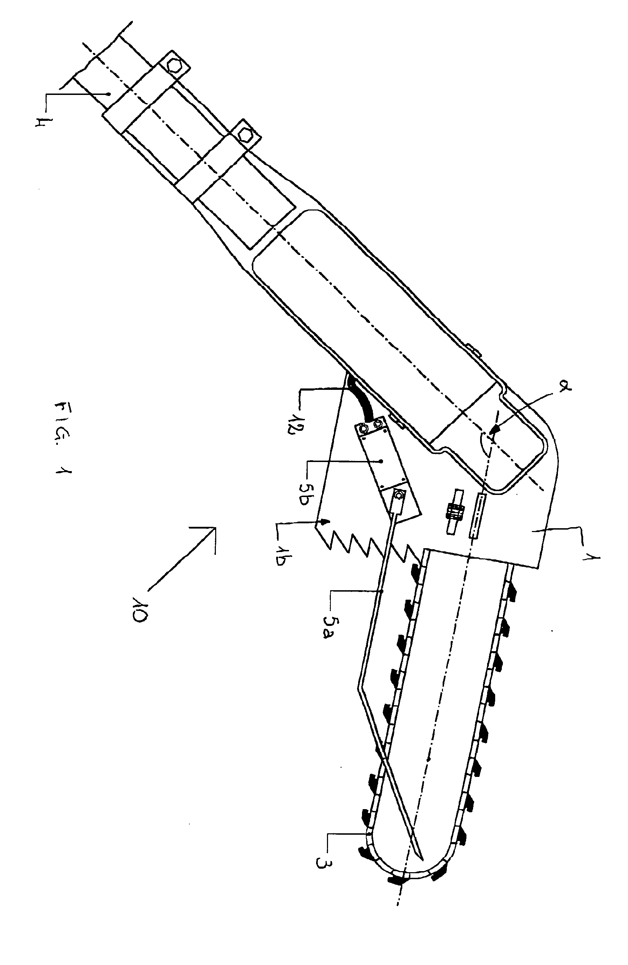

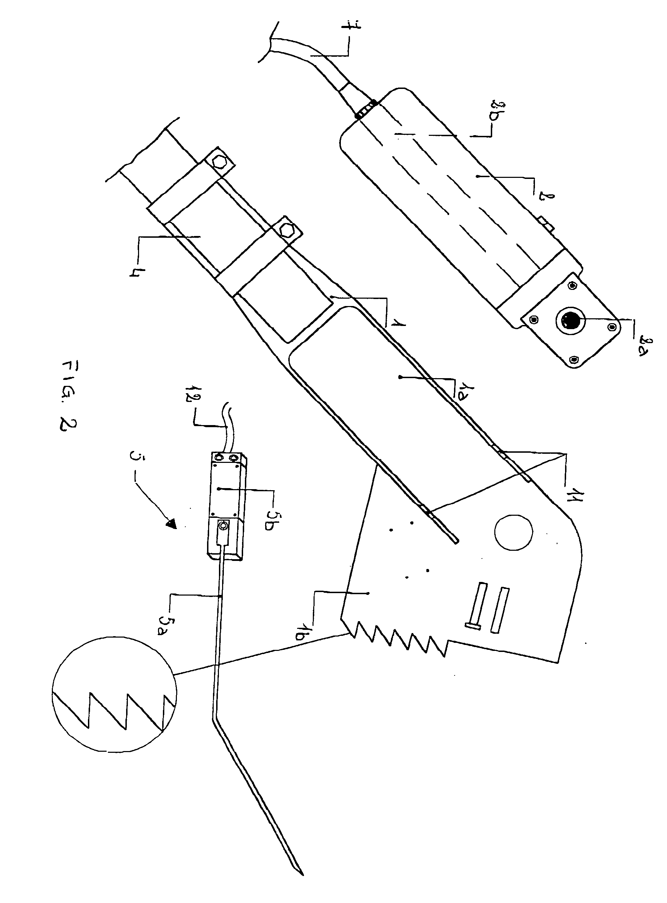

The use of an electric motor (2) in place of a combustion engine means that the motor may be advantageously mounted on the frame (1) together with the cutting means (3): Figures 1 and 2 show the means (11) for fixing the motor (2) to the frame (1) as well as the component parts of the safety device (5).

The motor (2) comprises a driving shaft (2b) aligned with the extension so as to limit the overall dimensions of the branch cutter (10) and associated with a shaft (2a) driven at 90° for transmitting the driving power to the cutting means (3).

The safety device (5) comprises a movable arm (5a) attached to an electronic component (5b) connected to the motor (2). The arm (5a) is free to rotate with respect to the electronic component (5b), as occurs when the branch cutter (10) is rested on a branch to be cut; when this occurs, the electronic component (5b), by means of a cable (12) which connects it to the motor (2), allows start-up of the motor (2) itself and the start of the cutting operation, which is then immediately suspended when the arm (5a) returns into its rest position after cutting has ended.

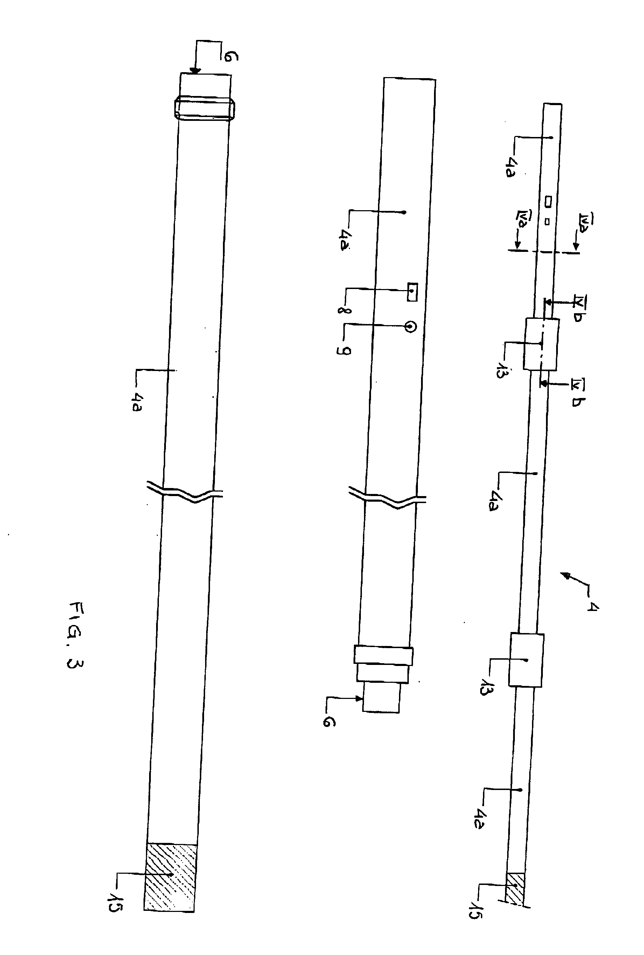

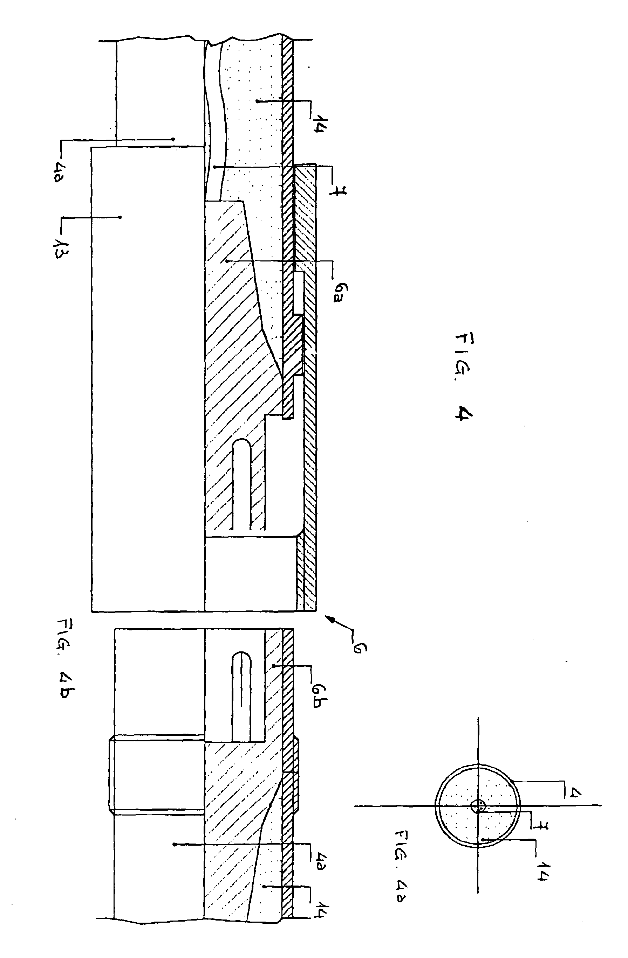

Figures 3 and 4 show an overall view and details of the extension: said extension comprises add-on elements (4a) which are able to modify the length thereof as required, interfering to a minimum degree with operation of the branch cutter (10).

In fact, each element (4a) of the extension (4) comprises means (6) for stable and removable fastening to the adjacent elements (4a), consisting of sockets (6a) and plugs (6b) of the industrial type situated at their ends. They are connected by an internal electric cable (7) so as to be able to ensure the electrical continuity along the whole of the extension (4). The electric cable (7) is embedded in expanded foam (14) which ensures the necessary electrical insulation properties. Externally, the elements (4a) of the extension (4) may be joined by means of screwable unions (13), as is shown in the figures, or using other rapid-engagement systems.

In this way, also during operation of the branch cutter (10), the length of the extension (4) may be varied by adding or removing one or more of the elements (4a) which form it, with an operation which is so quick that only a very short pause in operation of the device is required. In order to make this operation simpler and safer and make the operator's task of supporting the device less demanding, the frame (1) comprises a shaped appendage (1b), to be used as a provisional support for the branch cutter (10) on the tree, while the cutting means (3) are not in operation.

Although not strictly necessary, it is nevertheless advantageous if the first element (4a) of the extension (4), i.e. the element which is clasped by the operator, remains always in operation, since it is preferably this element which comprises means (8) for switching on the motor (2), which are directly accessible by the operator.

Means (9) for signalling the presence of electric power inside the extension (4) are also advantageously mounted on the same element (4a), so as to indicate immediately to the operator any problems which may prevent correct operation of the machine.

The same is applicable for the last element (4a) of the extension (4) which normally supports flanges (15) for fixing the cutting means (3).

As can be seen in Figure 1, the extension (4) and the cutting means (3) are not aligned, so that the operator is able to perform manoeuvres from the ground in total safety, outside of the falling line of the cut branches. In the figures, the extension (4) and the cutting means (3) form an angle (α) of approximately 125°, but a similar effect may be obtained in a range of between about 90° and 140°.

## Claims

1. Electric branch cutter for trees with a tall trunk, comprising a frame (1), an electric motor (2) housed in a special seat (1a) of the frame (1), means (3) for cutting the branches, and an extension (4) which can be associated with the frame (1), **characterized in that** the extension (4) comprises add-on elements (4a) able to modify the length thereof as required.

2. Electric branch cutter for trees with a tall trunk, comprising a frame (1), an electric motor (2) housed in a special seat (1a) of the frame (1), means (3) for cutting the branches, and an extension (4) which can be associated with the frame (1), **characterized in that** it comprises a safety device (5) able to allow start-up of the motor (2) only when the cutting means (3) are in contact with the branch to be cut.

3. Branch cutter according to Claim 1, **characterized in that** it comprises a safety device (5) able to allow start-up of the motor (2) only when the cutting means (3) are in contact with the branch to be cut.

4. Branch cutter according to Claim 1 or 3, **characterized in that** each element (4a) of the extension (4) comprises means (6) for stable and removable fastening to the adjacent elements (4a).

5. Branch cutter according to Claim 4, **characterized in that** said fastening means (6) comprise sockets (6a) and plugs (6b) of the industrial type situated at the ends of the elements (4a) of the extension (4).

6. Branch cutter according to Claim 5, **characterized in that** sockets (6a) and plugs (6b) of each element (4a) of the extension (4) are connected by an internal electric cable (7) so as to ensure the electrical continuity over the whole extension (4).

7. Branch cutter according to Claim 1 or 3, **characterized in that** an element (4a) of the extension (4) comprises means (8) for switching on the motor (2) which are accessible by the operator.

8. Branch cutter according to Claim 2 or 3, **characterized in that** the safety device (5) comprises a movable arm (5a) attached to an electronic component (5b) connected to the motor (2), said arm (5a) being free to rotate with respect to the electronic component (5b) and said electronic component (5b) allowing start-up of the motor (2) only when the movable arm (5a) is rotated with respect to the rest position.

9. Branch cutter according to Claim 1 or 2 or 3, **characterized in that** the extension (4) and the cutting means (3) are not aligned so that the operator is able to perform manoeuvres outside of the falling line of the cut branches.

10. Branch cutter according to Claim 9, **characterized in that** the extension (4) and the cutting means (3) form an angle (α) of between 90° and 140°.

11. Branch cutter according to Claim 1 or 2 or 3, **characterized in that** the motor (2) comprises a shaft (2a) driven at 90° with respect to the driving shaft (2b) so as to keep extension (4) and driving shaft (2b) aligned, in order to limit the overall dimensions.

12. Branch cutter according to Claim 1 or 2 or 3, **characterized in that** the frame (1) comprises a shaped appendage (1b) able to allow resting thereof on a tree when the cutting means (3) are not in operation.
